# EUROPÄISCHE PATENTANMELDUNG

(11) **EP 3 836 537 A1**
(43) Veröffentlichungstag der Anmeldung: **16.06.2021**
(21) Anmeldenummer: 19214486.3
(22) Anmeldetag: 09.12.2019
(51) Int. Cl.: H04N 7/18

(54) **SYSTEM ZUR ÜBERWACHUNG DER UMGEBUNG EINES KRAFTFAHRZEUGES**

(71) Anmelder: ZKW Group GmbH, 3250 Wieselburg (AT)
(72) Erfinder: Brandstetter, Martin, 3370 Ybbs (AT); Altmann, Johann, 3950 Gmünd (AT); Sporn, Martin, 3390 Melk (AT); Bechmann, Harald, 3250 Wieselburg (AT); Bednar, Ingeborg, 1130 Wien (AT); Jackl, Christian, 3250 Wieselburg (AT)
(74) Vertreter: Patentanwaltskanzlei Matschnig & Forsthuber OG

(57) **Zusammenfassung**

Die Erfindung betrifft ein System (1) zur Überwachung der Umgebung eines Kraftfahrzeuges (100), insbesondere eines autonomen oder teilautonomen Kraftfahrzeuges, wobei das System (1) zumindest eine optische Bilderfassungseinrichtung (2) sowie weiters eine Beleuchtungseinrichtung (3, 4) umfasst, wobei die optische Bilderfassungseinrichtung (2) zur Erfassung eines Erfassungsbereiches (E1) der Umgebung eingerichtet ist, und wobei der Erfassungsbereich (E1) zumindest teilweise, vorzugsweise vollständig, von der Beleuchtungseinrichtung (3, 4) beleuchtet werden kann, und wobei die Beleuchtungseinrichtung (3, 4) zur Erzeugung einer Kraftfahrzeug-Lichtverteilung oder eines Teiles einer Kraftfahrzeug-Lichtverteilung eingerichtet ist. Das System (1) umfasst zumindest eine optische Zusatz-Bilderfassungseinrichtung (5), welche dazu eingerichtet ist, einen sogenannten Zusatz-Erfassungsbereich (E2) zu erfassen, und wobei das System (1) weiters eine Zusatz-Beleuchtungseinrichtung (6) umfasst, welche dazu eingerichtet ist, den Zusatz-Erfassungsbereich (E2), auch als zweiter Erfassungsbereich bezeichnet, zumindest teilweise, vorzugsweise vollständig, zu beleuchten.

## Beschreibung

Die Erfindung betrifft ein System zur Überwachung der Umgebung eines Kraftfahrzeuges, insbesondere eines autonomen oder teilautonomen Kraftfahrzeuges, wobei das System zumindest eine optische Bilderfassungseinrichtung sowie weiters eine Beleuchtungseinrichtung umfasst, wobei die optische Bilderfassungseinrichtung zur Erfassung eines Erfassungsbereiches der Umgebung eingerichtet ist, und wobei der Erfassungsbereich zumindest teilweise, vorzugsweise vollständig, von der Beleuchtungseinrichtung beleuchtet werden kann, und wobei die Beleuchtungseinrichtung zur Erzeugung einer Kraftfahrzeug-Lichtverteilung oder eines Teiles einer Kraftfahrzeug-Lichtverteilung eingerichtet ist.

Weiters betrifft die Erfindung einen Kraftfahrzeug-Scheinwerfer für ein Kraftfahrzeug, insbesondere ein autonomes oder teilautonomes Kraftfahrzeug, wobei der Kraftfahrzeug-Scheinwerfer ein solches System umfasst.

In einem Kraftfahrzeug, wie zum Beispiel einem Automobil, sind mittlerweile häufig Bilderfassungseinheiten vorgesehen, mittels welcher die Umgebung des Kraftfahrzeuges, beispielsweise der in Fahrtrichtung gesehen vor dem Kraftfahrzeug liegende Bereich überwacht werden kann. Die Bilderfassungseinheit kann eine Objekterkennungseinheit und/oder eine Mustererkennungseinheit umfassen, oder eine oder mehrere solcher Einheiten sind an die Bilderfassungseinheit angeschlossen. Auf diese Weise können z.B. Personen, und/oder vorausfahrende Fahrzeuge und/oder entgegenkommende Fahrzeuge, und/oder Straßenmarkierungen und/oder Verkehrszeichen etc. erkannt werden.

Diese detektierte Information kann z.B. zur Steuerung oder teilweise Steuerung eines Kraftfahrzeuges, insbesondere eines teilautonomen oder autonomen Kraftfahrzeuges, verwendet werden, und/oder es kann eine automatische Lichtverteilungssteuerung eines Scheinwerfers bzw. der Scheinwerfer des Kraftfahrzeuges erfolgen.

Typischerweise handelt es sich bei solchen Bilderfassungseinrichtungen um Kameras, und zumeist sind die eine oder die mehreren Bilderfassungseinrichtungen nach Vorne, d.h. in etwa in Fahrtrichtung oder in Fahrtrichtung gerichtet. Bei Tag ist der Sichtbereich der Bilderfassungseinrichtung(en) durch das Umgebungslicht gut ausgeleuchtet. Bei Nacht wird der Erfassungsbereich von nach vorne gerichteten Bilderfassungseinrichtungen durch das von einem oder von den Fahrzeugscheinwerfern emittierte Licht (z.B. durch von Lichtmodulen, wie Abblendlicht- oder Fernlichtmodul des Scheinwerfers emittiertes Licht) ausgeleuchtet.

Um den Sichtbereich des Systems zu verbreitern, ist teilweise vorgesehen, dass zumindest eine zusätzliche Bilderfassungseinrichtung vorgesehen ist, welche einen Bereich seitlich des Erfassungsbereiches der bereits vorhandenen, in der Regel nach vorne gerichteten Bilderfassungseinrichtung(en), erfassen kann, sodass z.B. zusätzlich zum Vorwärtsbereich bei einem Kraftfahrzeug auch ein Seitenbereich des Fahrzeugs beobachtet/erfasst werden kann.

Der seitliche Bereich eines Fahrzeugs wird allerdings nicht oder nicht ausreichend genug durch den oder die Scheinwerfer des Fahrzeuges, insbesondere nicht durch Hauptlichtmodule des Scheinwerfers, wie Abblendlicht- oder Fernlichtmodul, ausgeleuchtet, sodass die Sicht der zusätzlichen Bilderfassungseinrichtung(en) bei Nacht eingeschränkt ist.

Es ist eine Aufgabe der Erfindung, eine Lösung dafür anzugeben, dass das eingangs genannte System auch bei Nacht voll funktionsfähig ist.

Diese Aufgabe wird mit einem eingangs erwähnten System dadurch gelöst, dass erfindungsgemäß das System zumindest eine optische Zusatz-Bilderfassungseinrichtung umfasst, welche dazu eingerichtet ist, einen sogenannten Zusatz-Erfassungsbereich zu erfassen, und wobei das System weiters eine Zusatz-Beleuchtungseinrichtung umfasst, welche dazu eingerichtet ist, den Zusatz-Erfassungsbereich, auch als zweiter Erfassungsbereich bezeichnet, zumindest teilweise, vorzugsweise vollständig, zu beleuchten.

Auf diese Weise kann auch bei Nacht oder bei schlechten Sichtbedingungen ein seitlicher Bereich zuverlässig mit der Zusatz-Bilderfassungseinheit erfasst werden.

Beispielsweise ist dabei vorgesehen, dass die Bilderfassungseinrichtung in eine erste Erfassungsrichtung ausgerichtet ist, und die Zusatz-Bilderfassungseinrichtung in eine zweite Erfassungsrichtung ausgerichtet ist, und wobei die erste Erfassungsrichtung und die zweite Erfassungsrichtung in horizontaler Richtung einen Winkel α zueinander aufweisen, wobei α ≠ 0 gilt.

Jede Bilderfassungseinrichtung weist einen bestimmten Erfassungswinkel, z.B. in horizontaler und/oder vertikaler Richtung auf. Dieser kann bei den Erfassungsrichtungen ident oder unterschiedlich sein. Unter der "Erfassungsrichtung" wird jene Richtung verstanden, welche den horizontalen und/oder vertikalen Erfassungswinkel halbiert.

Vorzugsweise ist vorgesehen, dass der Winkel α zwischen 45° und 65° liegt, wobei vorzugsweise α = 55° gilt. Dies erlaubt eine gute Erfassung eines seitlichen Bereiches.

Es kann vorgesehen sein, dass die Erfassungsrichtung in etwa parallel zu einer Kraftfahrzeug-Längsachse verläuft und die zweite Erfassungsrichtung von der Fahrzeug-Längsachse, in Vorwärtsrichtung gesehen, weggerichtet verläuft.

Vorzugsweise ist die Beleuchtungseinrichtung Bestandteil eines Kraftfahrzeugscheinwerfers, insbesondere des Kraftfahrzeuges, ist. Dadurch ergibt sich eine kompakte, leicht einzubauende Einheit.

Beispielsweise umfasst die Bilderfassungseinrichtung eine oder mehrere Kameras.

Die Zusatz-Bilderfassungseinrichtung umfasst vorzugsweise eine oder mehrere Zusatz-Kameras.

Es kann vorgesehen sein, dass die Beleuchtungseinrichtung ein Abblendlichtmodul zur Erzeugung einer Abblendlichtverteilung und/oder ein Fernlichtmodul zur Erzeugung einer Fernlichtverteilung oder ein kombiniertes Modul zur Erzeugung einer Abblendlicht- und einer Fernlichtverteilung umfasst.

Es kann vorgesehen sein, dass der erste Erfassungsbereich und der zweite Erfassungsbereich
- einander nicht überlappen und nicht berühren, oder
- einander bereichsweise überlappen, oder
- einander zumindest abschnittsweise berühren und möglicherweise bereichsweise überlappen.

Das System kann eine, insbesondere eine nicht-optische, Umgebungserfassungseinrichtung aufweisen, wobei die Umgebungserfassungseinrichtung beispielsweise RADAR und/oder LIDAR umfasst, und wobei die Umgebungserfassungseinrichtung dazu eingerichtet ist, einen weiteren, den sogenannten dritten Erfassungsbereich zu erfassen, und wobei die Umgebungserfassungseinrichtung eine dritte Erfassungsrichtung aufweist, wobei vorzugsweise der dritte Erfassungsbereich mit dem ersten und/oder zweiten, vorzugsweise mit dem ersten und dem zweiten Erfassungsbereich, jeweils zumindest teilweise überlappt, oder der dritte Erfassungsbereich mit keinem der beiden Erfassungsbereiche überlappt.

Die dritte Erfassungsrichtung liegt vorzugsweise in horizontaler Richtung gesehen zwischen den beiden anderen Erfassungsrichtungen, oder es gilt, dass die zweiten und die dritte Erfassungsrichtung zusammenfallen.

Das erfindungsgemäße System, beispielsweise ein Fahrzeugscheinwerfer, kann eine zusätzliche Erfassungseinrichtung, etwa ein Sensormodul, z.B. LIDAR/RADAR, umfassen bzw. aufweisen, mit dem zu den anderen (Bild-)Erfassungseinrichtungen zusätzliche, z.B. komplementäre und/oder redundante Daten gewonnen werden können. Durch sogenannte "Sensorfusion", bei der die Daten der Erfassungseinrichtungen kombiniert bzw. fusioniert werden, kann so ein möglichst gutes Bild bzw. Abbild der erfassten Umgebung gebildet werden.

Vorzugsweise ist vorgesehen, dass die Zusatz-Beleuchtungseinrichtung eine Beleuchtungsvorrichtung zur Erzeugung einer Kraftfahrzeug-Lichtverteilung oder eines Teiles einer Kraftfahrzeug-Lichtverteilung ist, oder die Zusatz-Beleuchtungsvorrichtung eine Lichtquelle, etwa in Form einer Lampe oder einer LED ist.

In Abhängigkeit von der Art der verwendeten Zusatz-Bilderfassungseinheit kann die Zusatz-Beleuchtungseinrichtung, insbesondere die Lichtquelle, zur Emission von Licht im sichtbaren Bereich eingerichtet, z.B. als Weißlichtquelle ausgebildet sein, oder zur Emission von Licht im Infrarot-Bereich ausgebildet sein.

Beispielsweise kann vorgesehen sein, dass die Zusatz-Beleuchtungseinrichtung zur Erzeugung einer Abbiegelicht-Lichtverteilung eingerichtet ist.

Weiters kann vorgesehen sein, dass ein Ausleuchtebereich der Zusatz-Beleuchtungseinrichtung, der sogenannte Zusatz-Ausleuchtebereich,
- unterhalb einer HD-Linie für Abblendlicht liegt, um etwa eine Blendung, z.B. von Gegenverkehr zu vermeiden, oder
- unterhalb und oberhalb sowie vorzugsweise an der HD-Linie für Abblendlicht liegt, wodurch eine möglichst gute Ausleuchtung und somit Unterstützung der Zusatz-Bilderfassungseinrichtung erreicht werden kann.

Unter dem "Ausleuchtebereich" wird, wie dies der Name schon sagt, jener Bereich, z.B. vor einem Kraftfahrzeug, verstanden, welcher von der jeweiligen Beleuchtungseinrichtung beleuchtet wird. Bei der Beleuchtungseinrichtung zur Erzeugung einer Kraftfahrzeug-Lichtverteilung oder eines Teiles einer Kraftfahrzeug-Lichtverteilung entspricht dieser Ausleuchtebereich, der sogenannte Haupt-Ausleuchtebereich, z.B. einer Abblendlichtverteilung oder einer Fernlichtverteilung.

Vorzugsweise sind die Zusatz-Bilderfassungseinrichtung und die Zusatz-Beleuchtungseinrichtung synchronisiert betrieben, derart dass die Zusatz-Beleuchtungseinrichtung nur in Zeitfenstern Licht emittiert, in welchen die Zusatz-Bilderfassungseinrichtung Bilder erfasst.

Generell muss der seitliche Bereich nicht andauernd ausgeleuchtet werden, sondern es ist ausreichend, diesen nur dann zu beleuchten, wenn die Zusatz-Bilderfassungseinrichtung die Umgebung erfasst, und/oder wenn die Lichtbedingungen eine Aktivierung notwendig machen.

Beispielsweise kann eine Kopplung an die Umgebungserfassungseinrichtung vorgesehen sein, derart dass auf Grund von Informationen der Umgebungserfassungseinrichtung die Zusatz-Beleuchtungseinrichtung aktiviert wird. Erkennt beispielsweise die Umgebungserfassungseinrichtung ein Hindernis im seitlichen Bereich, die Zusatz-Bilderfassungseinheit erkennt aber dieses Hindernis nicht, so wird die Zusatz-Beleuchtungseinrichtung aktiviert.

Es kann vorgesehen sein, dass die Zusatz-Bilderfassungseinrichtung zur Erfassung von sichtbarem Licht und/oder für von IR-Strahlung eingerichtet ist.

Weiters betrifft die Erfindung einen Kraftfahrzeug-Scheinwerfer für ein Kraftfahrzeug, insbesondere ein autonomes oder teilautonomes Kraftfahrzeug, wobei der Kraftfahrzeug-Scheinwerfer ein solches System umfasst, wobei vorzugsweise die optische Bilderfassungseinrichtung in einem seitlichen Randbereich des Scheinwerfers angeordnet ist, und/oder die optische Zusatz-Bilderfassungsrichtung in einem zweiten Randbereich des Scheinwerfers angeordnet ist/sind.

Weiters betrifft die Erfindung ein Kraftfahrzeug mit einem, vorzugsweise zwei, einem linken und einem rechten, Kraftfahrzeug-Scheinwerfer wie vorstehend beschrieben.

Vorzugsweise umfasst das Kraftfahrzeug ein System wie vorstehend beschrieben, wobei zumindest die Beleuchtungseinrichtung Bestandteil eines Kraftfahrzeug-Scheinwerfers des Kraftfahrzeuges ist.

Vorzugsweise ist weiters zumindest die Zusatz-Beleuchtungseinrichtung Bestandteil eines Kraftfahrzeug-Scheinwerfers, insbesondere jenes Kraftfahrzeug-Scheinwerfers, welcher die Beleuchtungseinrichtung umfasst.

Im Folgenden ist die Erfindung an Hand der Zeichnung näher erläutert. In dieser zeigt
- Fig. 1: einen linken Kraftfahrzeugscheinwerfer eines Kraftfahrzeuges, und
- Fig. 2: ein Kraftfahrzeug mit zwei Kraftfahrzeugscheinwerfern.

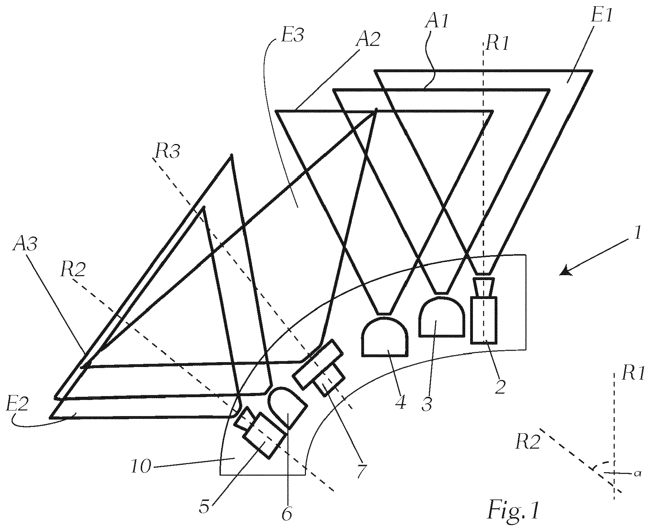

**Figur 1** zeigt ein erfindungsgemäßes System 1, welches in einen Kraftfahrzeugscheinwerfer 10 eingebaut ist oder einen solchen Kraftfahrzeugscheinwerfer bildet. Das System 1 umfasst eine optische Bilderfassungseinrichtung 2 in Form einer Kamera 2 sowie eine Beleuchtungseinrichtung 3, 4. Die Beleuchtungseinrichtung umfasst dabei in diesem Beispiel ein Abblendlichtmodul 3 und ein Fernlichtmodul 4, welche zur Erzeugung einer Abblendlicht- bzw. Fernlichtverteilung eingerichtet sind, mittels welcher die ersten Ausleuchtebereiche A1, A2 ("Haupt-Ausleuchtebereiche") ausgeleuchtet werden, wenn das jeweilige Modul aktiviert ist.

Die Kamera 2 ist zur Erfassung eines Erfassungsbereiches E1 der Umgebung eingerichtet, sodass sie Bilder der erfassten Umgebung erzeugen kann. Der Erfassungsbereich E1 wird dabei zumindest teilweise, wie dargestellt, oder vorzugsweise vollständig von dem Abblendlichtmodul 3 und/oder dem Fernlichtmodul 4 beleuchtet werden.

Erfindungsgemäß umfasst das System 1 eine optische Zusatz-Bilderfassungseinrichtung 5, vorzugsweise in Form einer Zusatz-Kamera 5, welche dazu eingerichtet ist, einen Zusatz-Erfassungsbereich E2 zu erfassen. Außerdem weist das System 1 weiters eine Zusatz-Beleuchtungseinrichtung 6 auf, mit einem Zusatz-Ausleuchtebereich A3, welche dazu eingerichtet ist, den Zusatz-Erfassungsbereich E2, auch als zweiter Erfassungsbereich E2 bezeichnet, zumindest teilweise, vorzugsweise vollständig, zu beleuchten.

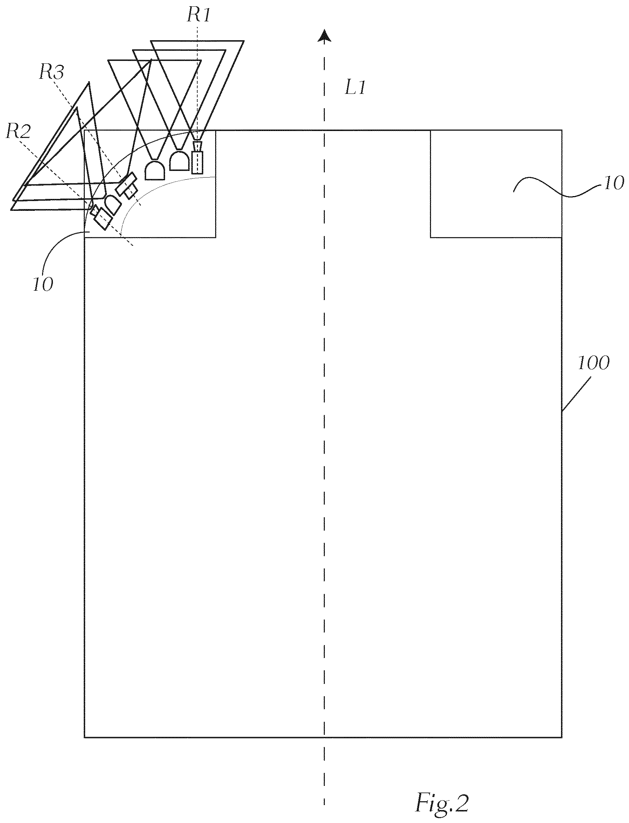

Auf diese Weise kann auch bei Nacht oder bei schlechten Sichtbedingungen ein seitlicher Bereich des Systems 1, insbesondere des Kraftfahrzeugscheinwerfers 10 (bzw. des Kraftfahrzeuges 100, siehe **Figur 2**) zuverlässig mit der Zusatz-Bilderfassungseinheit erfasst werden.

Die Zusatz-Beleuchtungseinrichtung 6 kann eine Beleuchtungsvorrichtung zur Erzeugung einer Kraftfahrzeug-Lichtverteilung oder eines Teiles einer Kraftfahrzeug-Lichtverteilung sein, bei der gezeigten Ausführungsform handelt es sich bei der Zusatz-Beleuchtungsvorrichtung 6 um eine Lichtquelle, etwa in Form einer Lampe oder einer LED.

In Abhängigkeit von der Art der verwendeten Zusatz-Bilderfassungseinheit emittiert die Zusatz-Beleuchtungseinrichtung 6, in diesem Beispiel die Lichtquelle 6, Licht im sichtbaren Bereich (z.B. Weißlichtquelle), oder sie emittiert Licht im Infrarot-Bereich.

Das gezeigte System 1 umfasst außerdem eine nicht-optische Umgebungserfassungseinrichtung 7, wobei diese Umgebungserfassungseinrichtung 7 beispielsweise RADAR und/oder LIDAR umfasst, und dazu eingerichtet ist, einen weiteren, den sogenannten dritten Erfassungsbereich E3 zu erfassen.

Wie in **Figur 1** zu erkennen ist, ist die Bilderfassungseinrichtung 2 in eine erste Erfassungsrichtung R1 ausgerichtet, und die Zusatz-Bilderfassungseinrichtung 5 ist in eine zweite Erfassungsrichtung R2 ausgerichtet. Die erste Erfassungsrichtung R1 und die zweite Erfassungsrichtung R2 nehmen in horizontaler Richtung gesehen einen Winkel α zueinander ein, wobei α ≠ 0 gilt. Vorzugsweise ist vorgesehen, dass der Winkel α zwischen 45° und 65° liegt, wobei vorzugsweise α = 55° gilt. Dies erlaubt eine gute Erfassung eines seitlichen Bereiches.

Wie in **Figur 2** zu erkennen ist, welche ein Kraftfahrzeug 100 zeigt, in welches das System 1 als linker Kraftfahrzeugscheinwerfer 10 eingebaut ist (vorzugsweise ist ein entsprechend gespiegeltes System 1 als rechter Scheinwerfer 10 ebenfalls in das Fahrzeug eingebaut), kann die Erfassungsrichtung R1 in etwa parallel zu einer Kraftfahrzeug-Längsachse L1 verlaufen und die zweite Erfassungsrichtung R2 verläuft von der Fahrzeug-Längsachse L1, in Vorwärtsrichtung gesehen, weggerichtet.

Die Umgebungserfassungseinrichtung 7 weist eine dritte Erfassungsrichtung R3 auf, wobei vorzugsweise der dritte Erfassungsbereich E3 mit dem ersten und/oder zweiten, vorzugsweise mit dem ersten und dem zweiten Erfassungsbereich E1, E2, jeweils zumindest teilweise überlappt.

Die Umgebungserfassungseinrichtung 7 liegt vorzugsweise zwischen den beiden Kameras 2, 5. Die dritte Erfassungsrichtung R3 nimmt vorzugsweise - in horizontaler Richtung gesehen - einen Winkel ungleich Null zu der ersten Erfassungsrichtung R1 ein, und verläuft in Vorwärtsrichtung von einer Fahrzeuglängsachse L1 weg. Der Winkel zwischen der dritten Erfassungsrichtung R3 und der ersten Erfassungsrichtung R1 ist beispielsweise kleiner oder gleich dem Winkel α zwischen erster und zweiter Erfassungsrichtung R1, R2.

Vorzugsweise ist, wie dargestellt, die optische Bilderfassungseinrichtung 2 in einem seitlichen Randbereich des Scheinwerfers 10 angeordnet, vorzugsweise in jenem Randbereich, der dem Fahrzeuginneren zugwendet ist, und die optische Zusatz-Bilderfassungsrichtung 5 ist in einem zweiten Randbereich, dem an der Fahrzeugaußenseite liegenden Randbereich des Scheinwerfers, angeordnet.

## Patentansprüche

1. System (1) zur Überwachung der Umgebung eines Kraftfahrzeuges (100), insbesondere eines autonomen oder teilautonomen Kraftfahrzeuges, wobei das System (1) zumindest eine optische Bilderfassungseinrichtung (2) sowie weiters eine Beleuchtungseinrichtung (3, 4) umfasst, wobei die optische Bilderfassungseinrichtung (2) zur Erfassung eines Erfassungsbereiches (E1) der Umgebung eingerichtet ist, und wobei der Erfassungsbereich (E1) zumindest teilweise, vorzugsweise vollständig, von der Beleuchtungseinrichtung (3, 4) beleuchtet werden kann, und wobei die Beleuchtungseinrichtung (3, 4) zur Erzeugung einer Kraftfahrzeug-Lichtverteilung oder eines Teiles einer Kraftfahrzeug-Lichtverteilung eingerichtet ist,
**dadurch gekennzeichnet, dass**
das System (1) zumindest eine optische Zusatz-Bilderfassungseinrichtung (5) umfasst, welche dazu eingerichtet ist, einen sogenannten Zusatz-Erfassungsbereich (E2) zu erfassen, und wobei das System (1) weiters eine Zusatz-Beleuchtungseinrichtung (6) umfasst, welche dazu eingerichtet ist, den Zusatz-Erfassungsbereich (E2), auch als zweiter Erfassungsbereich bezeichnet, zumindest teilweise, vorzugsweise vollständig, zu beleuchten.

2. System nach Anspruch 1, wobei die Bilderfassungseinrichtung (2) in eine erste Erfassungsrichtung (R1) ausgerichtet ist, und die Zusatz-Bilderfassungseinrichtung (5) in eine zweite Erfassungsrichtung (R2) ausgerichtet ist, und wobei die erste Erfassungsrichtung (R1) und die zweite Erfassungsrichtung (R2) in horizontaler Richtung einen Winkel α zueinander aufweisen, wobei α ≠ 0 gilt, wobei vorzugsweise der Winkel α zwischen 45° und 65° liegt, wobei vorzugsweise α = 55° gilt.

3. System nach Anspruch 2, wobei die Erfassungsrichtung (R1) in etwa parallel zu einer Kraftfahrzeug-Längsachse (L1) verläuft und die zweite Erfassungsrichtung (R2) von der Fahrzeug-Längsachse (L1), in Vorwärtsrichtung gesehen, weggerichtet verläuft.

4. System nach einem der Ansprüche 1 bis 3, wobei die Beleuchtungseinrichtung (3, 4) Bestandteil eines Kraftfahrzeugscheinwerfers (10), insbesondere des Kraftfahrzeuges (100), ist.

5. System nach einem der Ansprüche 1 bis 4, wobei die Bilderfassungseinrichtung (2) eine oder mehrere Kameras umfasst, und/oder wobei die Zusatz-Bilderfassungseinrichtung (5) eine oder mehrere Zusatz-Kameras umfasst.

6. System nach einem der Ansprüche 1 bis 5, wobei die Beleuchtungseinrichtung (3, 4) ein Abblendlichtmodul (3) zur Erzeugung einer Abblendlichtverteilung und/oder ein Fernlichtmodul (4) zur Erzeugung einer Fernlichtverteilung oder ein kombiniertes Modul zur Erzeugung einer Abblendlicht- und einer Fernlichtverteilung umfasst.

7. System nach einem der Ansprüche 1 bis 6, wobei der erste Erfassungsbereich (E1) und der zweite Erfassungsbereich (E2)
- einander nicht überlappen und nicht berühren, oder
- einander bereichsweise überlappen, oder
- einander zumindest abschnittsweise berühren und möglicherweise bereichsweise überlappen.

8. System nach einem der Ansprüche 1 bis 7, wobei es eine, insbesondere eine nicht-optische, Umgebungserfassungseinrichtung (7) aufweist, wobei die Umgebungserfassungseinrichtung (7) beispielsweise RADAR und/oder LIDAR umfasst, und wobei die Umgebungserfassungseinrichtung (7) dazu eingerichtet ist, einen weiteren, den sogenannten dritten Erfassungsbereich (E3) zu erfassen, und wobei die Umgebungserfassungseinrichtung (7) eine dritte Erfassungsrichtung (R3) aufweist, wobei vorzugsweise der dritte Erfassungsbereich (E3) mit dem ersten und/oder zweiten, vorzugsweise mit dem ersten und dem zweiten Erfassungsbereich (E1, E2), jeweils zumindest teilweise überlappt, oder der dritte Erfassungsbereich (E1, E2) mit keinem der beiden Erfassungsbereiche überlappt.

9. System nach einem der Ansprüche 1 bis 8, wobei die Zusatz-Beleuchtungseinrichtung (6) eine Beleuchtungsvorrichtung zur Erzeugung einer Kraftfahrzeug-Lichtverteilung oder eines Teiles einer Kraftfahrzeug-Lichtverteilung ist, oder die Zusatz-Beleuchtungsvorrichtung (6) eine Lichtquelle, etwa in Form einer Lampe oder einer LED, ist.

10. System nach einem der Ansprüche 1 bis 9, wobei Zusatz-Beleuchtungseinrichtung (6), insbesondere die Lichtquelle (6), zur Emission von Licht im sichtbaren Bereich eingerichtet ist, und z.B. als Weißlichtquelle ausgebildet ist, oder zur Emission von Licht im Infrarot-Bereich ausgebildet ist.

11. System nach einem der Ansprüche 1 bis 10, wobei die Zusatz-Beleuchtungseinrichtung (6) zur Erzeugung einer Abbiegelicht-Lichtverteilung eingerichtet ist.

12. System nach einem der Ansprüche 1 bis 11, wobei ein Ausleuchtebereich (A3) der Zusatz-Beleuchtungseinrichtung (6), der sogenannte Zusatz-Ausleuchtebereich,
- unterhalb einer HD-Linie liegt, oder
- unterhalb und oberhalb sowie vorzugsweise an der HD-Linie liegt.

13. System nach einem der Ansprüche 1 bis 12, wobei die Zusatz-Bilderfassungseinrichtung (5) und die Zusatz-Beleuchtungseinrichtung (6) synchronisiert betrieben sind, derart dass die Zusatz-Beleuchtungseinrichtung (6) nur in Zeitfenstern Licht emittiert, in welchen die Zusatz-Bilderfassungseinrichtung (5) Bilder erfasst.

14. System nach einem der Ansprüche 1 bis 13, wobei die Zusatz-Bilderfassungseinrichtung (5) zur Erfassung von sichtbarem Licht und/oder für von IR-Strahlung eingerichtet ist.

15. Kraftfahrzeug-Scheinwerfer für ein Kraftfahrzeug (100), insbesondere ein autonomes oder teilautonomes Kraftfahrzeug, wobei der Kraftfahrzeug-Scheinwerfer (10) ein System (1) nach einem der Ansprüche 1 bis 14 umfasst, wobei vorzugsweise die optische Bilderfassungseinrichtung (2) in einem seitlichen Randbereich des Scheinwerfers (10) angeordnet ist, und/oder die optische Zusatz-Bilderfassungsrichtung (5) in einem zweiten Randbereich des Scheinwerfers angeordnet ist/sind.

16. Kraftfahrzeug mit einem, vorzugsweise zwei, einem linken und einem rechten, Kraftfahrzeug-Scheinwerfer (10) nach Anspruch 15, wobei vorzugsweise zumindest die Beleuchtungseinrichtung (3, 4) Bestandteil eines Kraftfahrzeug-Scheinwerfers (10) des Kraftfahrzeuges (100) ist, und/oder wobei vorzugsweise weiters zumindest die Zusatz-Beleuchtungseinrichtung (6) Bestandteil eines Kraftfahrzeug-Scheinwerfers, insbesondere jenes Kraftfahrzeug-Scheinwerfers (10), welcher die Beleuchtungseinrichtung (3, 4) umfasst, ist.
